# DEMANDE DE BREVET EUROPEEN

(11) **EP 1 603 250 A1**
(43) Date de publication de la demande: **07.12.2005**
(21) Numéro de dépôt: 05300442.0
(22) Date de dépôt: 01.06.2005
(51) Int. Cl.: H04B 3/56

(54) **Serveur d'impression courants porteurs**

(30) Priorité: 01.06.2004 FR 0405872
(71) Demandeur: Courant Multimedia, 86130 Jaunay-clan (FR)
(72) Inventeur: Breton, Hervé Michel Eric, 86000 Poitiers (FR)
(74) Mandataire: Livet, Marie-José

(57) **Abrégé**

Adaptateur USB hôte Courants Porteurs permettant de connecter des appareils équipés d'USB client sur les prises électriques du réseau électrique, caractérisé en ce qu'il est constitué d'une prise électrique mâle (1a), d'une prise électrique femelle (1b) et d'un connecteur USB hôte (1c) soudé sur une carte électronique miniaturisée (2).

## Description

### 1. Objet de l'invention

La présente invention a pour objet un serveur d'impression réseau courant porteurs SIRCP intégrant un serveur web de configuration et d'administration et plus largement un serveur USB maître pouvant piloter tous types de client USB tels que les imprimantes, les disques durs, les webcam...

### 2. Description de l'état de la technique.

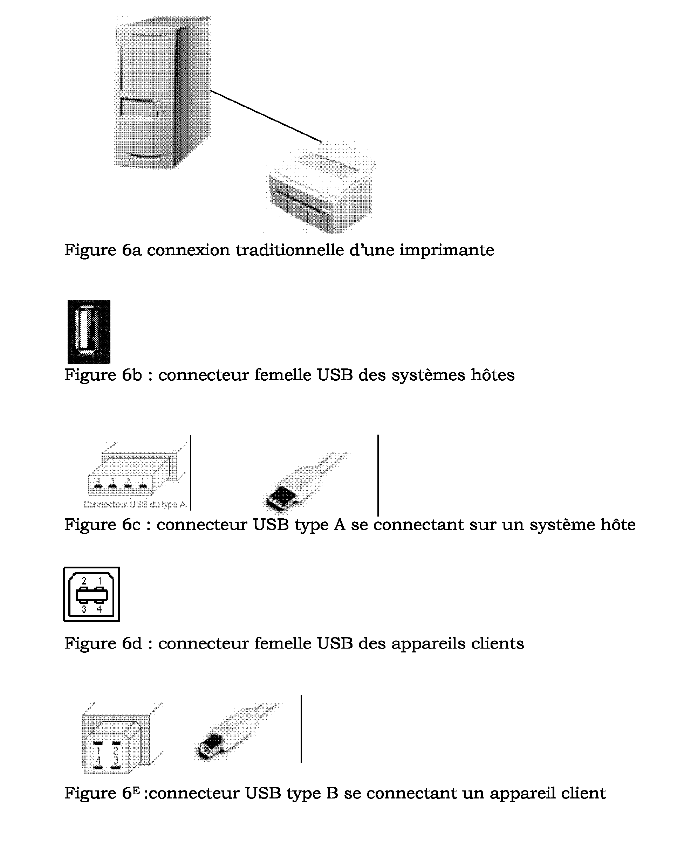

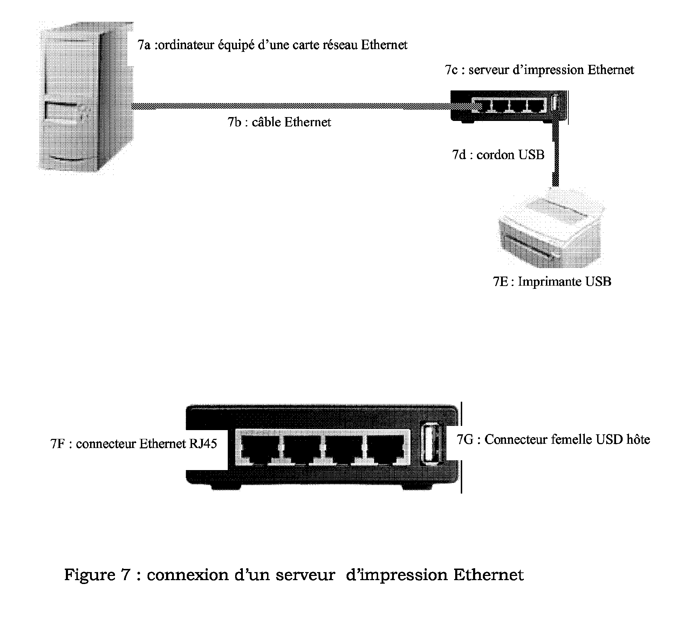

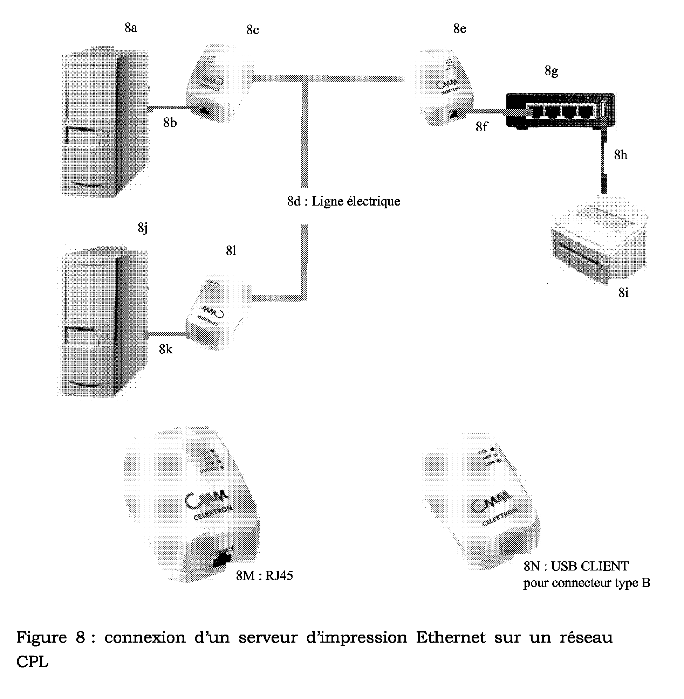

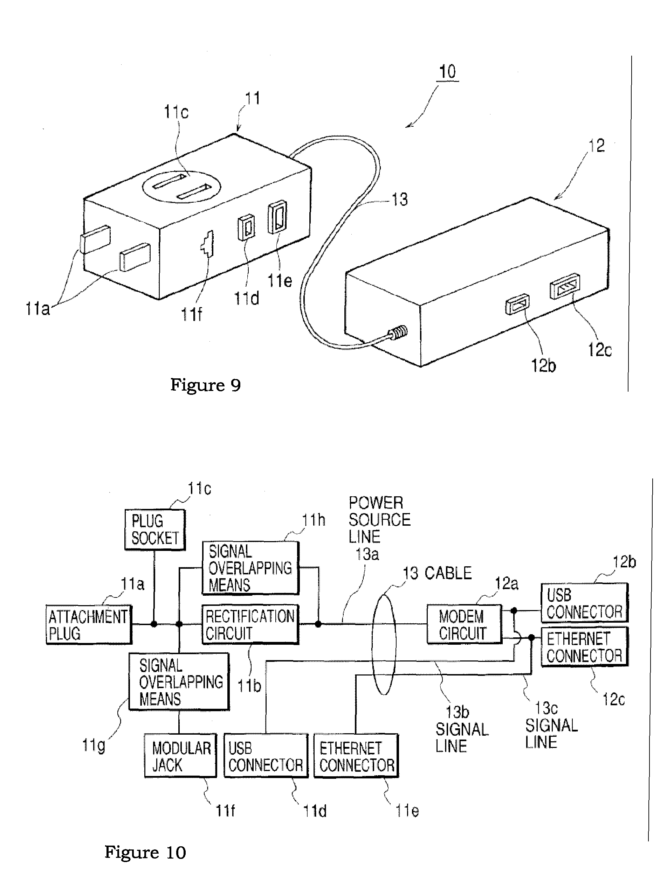

L'état de la technique est représenté sur les figures 6 à 12.

La méthode traditionnelle d'impression consiste à d'envoyer le contenu à imprimer vers une imprimante (6b) à partir de l'ordinateur (6a) sur lequel est branchée l'imprimante (6b) qui peut être multifonction. Cette méthode utilise les interfaces de communication standard telles que le connecteur femelle USB des systèmes hôtes (6c) disponibles sur les ordinateurs (6a) contenant le logiciel pilote de l'imprimante (6b). L'imprimante (6b) est un appareil client relié au système hôte (6a) grâce à un cordon USB équipé d'un connecteur USB mâle de type A (6c) pour le branchement au système hôte et d'un connecteur mâle de type B (6d) pour le branchement à l'appareil client.

Cette solution nécessite une imprimante par ordinateur.

Il existe également des méthodes d'impressions en réseau.

Une méthode d'impression en réseau est actuellement réalisée grâce à des serveurs d'impression Ethernet (7c) équipés d'un connecteur RJ5 (7F) et d'un connecteur USB hôte (7G). Dans ce cas l'ordinateur souhaitant imprimer un document envoie par son connecteur réseau Ethernet RJ45 les données vers le serveur d'impression (7C) qui convertit les données dans un format acceptable par l'imprimante (7E) sur laquelle il est branché via un cordon USB (7d). Le serveur d'impression peut être un ordinateur sur lequel est branché l'imprimante.

Cette solution nécessite que le bâtiment soit équipé d'un réseau câblé ETHERNET (7b) très coûteux. De plus l'imprimante (7E) et le serveur d'impression (7C) seront obligatoirement à proximité d'une prise RJ45 murale qui n'aura pas été, dans la plupart des cas, placée à l'endroit souhaité. Enfin il faudra 2 prises électriques une pour brancher l'imprimante (7E) et l'autre pour brancher le serveur d'impression (7D).

Une deuxième méthode d'impression en réseau consiste à utiliser des modems courants porteurs (8c et 81). Le connecteur Ethernet RJ45 de l'ordinateur est branché sur le connecteur Ethernet RJ45 (8M) du modem courant porteur Ethernet (8c). Si l'ordinateur n'est pas équipé de connecteur Ethernet RJ45, il peut être connecté sur le connecteur USB mâle type B (8N) du modem courants porteurs USB (8L) grâce à un cordon USB équipé d'un connecteur USB de type A (6d) et d'un connecteur USB de type B (6E). Le connecteur Ethernet RJ45 (7f) du serveur d'impression Ethernet (8g) est branché sur le connecteur Ethernet RJ45 (8M) du modem courants porteurs Ethernet (81) via un câble Ethernet RJ45 (8f). L'ordinateur (8A ou 8J) souhaitant imprimer un document envoie sur la ligne électrique (8D) par l'intermédiaire d'un modem courant porteur Ethernet (8C) ou USB de type B (8L) les données vers le serveur d'impression (8G) qui les convertit dans un format acceptable par l'imprimante (8I) branchée via un cordon USB (8H) sur le connecteur USB femelle de type A (6C).

Cette solution, même si elle présente l'avantage de pouvoir positionner l'imprimante à l'emplacement souhaité, nécessite en complément du serveur d'impression (8G) un modem courant porteur Ethernet (8E). Par conséquent il doit obligatoirement avoir trois prises électriques à proximité de l'installation pour brancher l'imprimante, le serveur d'impression et le modem courant porteur. Les cordons d'alimentation du serveur d'impression et de l'imprimante étant branchés à proximité du modem courant porteur perturberont la communication à cause du bruit généré par leur alimentation de puissance. De plus cette solution reste relativement coûteuse.

Enfin, dans la plupart des cas ces serveurs d'impression utilisent le protocole IPP (INTERNET PRINTING PROTOCOLE) qui nécessite l'installation d'un logiciel client sur le PC souhaitant imprimer. La limite du protocole IPP est que d'une part il n'est pas nécessairement compatible avec toutes les marques d'imprimantes et que d'autre part le logiciel client dépend du système installé sur l'ordinateur.

La figure 9 représente une vue globale d'un modem courant porteur décrit dans le document n° EP1343253 et la figure 10 représente son diagramme en bloc. En se référant aux figures 9 et 10, une alimentation de puissance (11) du modem Courant porteur (10) et l'unité principale du modem (12) sont connectés ensemble par un câble 13. L'alimentation de puissance 11 convertit l'alimentation secteur AC en alimentation DC et fournit une tension continue DC à l'unité principale du modem (12). L'alimentation de puissance est équipée d'une prise électrique mâle (11a) pour l'alimentation secteur et dispose d'un circuit de redressement (11b). Une prise électrique femelle (11c) reliée directement à la prise électrique mâle est disponible sur le dessus du boîtier de l'alimentation de puissance (11). Les prises électriques (11a) et (11c) sont adaptées pour le réseau électrique anglais. Des connecteurs sont disponibles sur le coté du boîtier de l'alimentation de puissance (11) pour échanger des données avec une unité externe de traitement de l'information telle que un ordinateur. Cet ensemble de connecteur comprend un connecteur USB (11d), un connecteur Ethernet horizontal et une prise modulaire (11f) utilisés dans les systèmes téléphoniques. Les extrémités des prises modulaires sont connectées sur des fréquences adaptées à la prise électrique mâle (11a) via le système de chevauchement de signal (11g). Le circuit du modem (12a) est relié à un ensemble de connecteur pour échanger des données avec une unité de traitement de l'information tel que un ordinateur. Cet ensemble de connecteur est disponible sur le boîtier du bloc principal du modem (12). Il est composé d'un connecteur USB (12b) et d'un connecteur Ethernet (12c) qui sont reliés aux connecteurs USB (11d) et Ethernet (11^{e}) par les câbles (13b) et (13c). Pour réaliser un communication réseau la prise électrique (11a) est branchée dans une prise électrique murale. La prise électrique de l'unité externe de traitement de l'information (ordinateur) est branchée dans la prise électrique femelle (11c) du boîtier d'alimentation 11. Le connecteur de l'unité de traitement de l'information est connecté sur le connecteur USB (12b) ou le connecteur Ethernet (12c) du modem courant porteur.

Ce produit de communication courant porteur antérieur comporte des limites d'utilisation. Une première limitation est que les connecteurs USB (11d) et (12b) sont des connecteurs femelles du type B (6^{E}). En effet l'interface USB du modem (12a) est un client USB. Les appareils clients USB ne peuvent communiquer qu'avec des systèmes hôtes USB tels que les ports USB des ordinateurs. Les connecteurs des hôtes USB sont de type A et sont différents des connecteurs des clients USB afin de ne pas les confondre. Un client USB ne peut pas communiquer avec un autre client USB et un hôte USB ne peut pas communiquer avec un autre hôte USB. Les imprimantes étant des clients USB, elles sont équipées de connecteurs USB de type B et ne peuvent communiquer qu'avec des hôtes USB équipés de connecteur USB de type A.

En seconde limitation, ce modem antérieur ne dispose pas d'un contrôleur hôte pour communiquer avec une imprimante ou tout autres clients USB tels que une WEBCAM, un disque dur...Il ne dispose pas non plus d'unité de traitement pouvant intégrer un driver de contrôleur hôte et un protocole de communication propre à la l'impression par un réseau. Par conséquent, ce modem antérieur ne peut pas convertir les données reçues dans un format acceptable par une imprimante.

La troisième limitation est due à la liaison directe de la prise électrique femelle (11c) vers la prise électrique mâle (11a). Les alimentations des ordinateurs ou tout autre produit électrique qui seront branchées sur la prise électrique femelle (11c) injectent du bruit sur le signal de communication courant porteur du modem (12a) transmis sur la ligne électrique par la prise électrique mâle (11a). La communication courant porteur sera donc de mauvaise qualité.

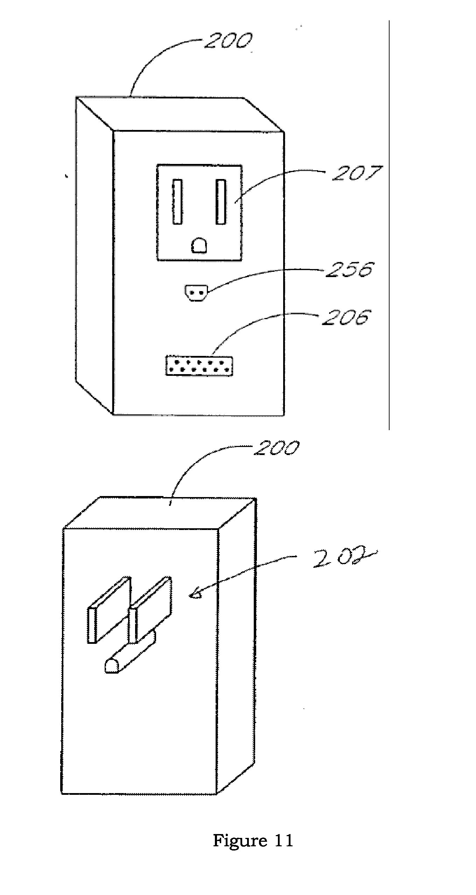

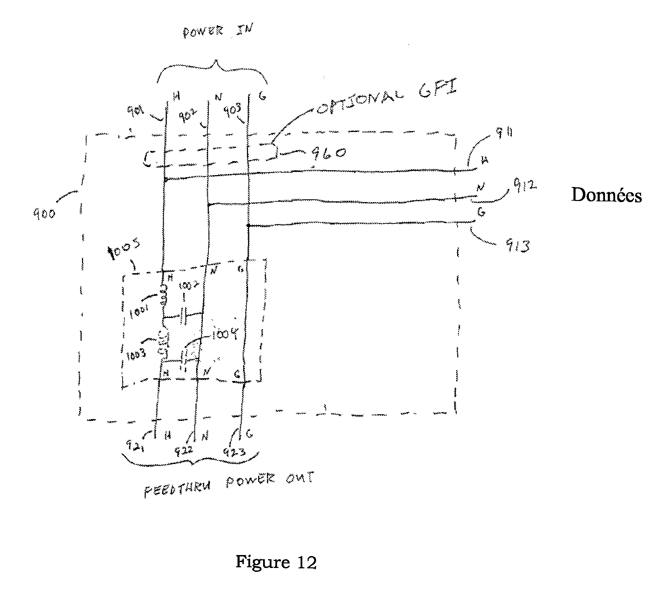

La figure 11 est un vue globale d'un adaptateur réseau courant porteur modulaire (200) décrit dans le document WO 02 05 451. L'adaptateur (200) est composé d'une prise électrique mâle (202) et d'une prise électrique femelle (207) directement reliée à la prise électrique mâle (202). Les prises électriques (202), (207) et l'alimentation de l'adaptateur (200) sont adaptées aux réseaux électrique 110V RMS. L'adaptateur (200) est également composé de connecteurs de données tels qu'un connecteur USB (256) et un connecteur port parallèle de port (206). Les connecteurs de données (206) et (256) peuvent être configurés pour l'Ethernet, le firewire, le câble fibre optic...Un ordinateur une imprimante ou tout autre dispositif réseau se connecte par un câble réseau aux connecteurs de données (256) et (206). Comme le montre la figure 12, l'adaptateur (200) est équipé d'un filtre passe bas (900) entre la prise électrique femelle (207) et la carte électronique le l'adaptateur (200) afin d'éviter les bruits hautes fréquences injectés par les appareils branchés sur la prise (207). Le filtre est composé d'une inductance (1001) et d'un condensateur (1002). Il peut être mis en cascade avec une deuxième inductance (1003) et un deuxième condensateur (1004). L'inductance est connectée vers la carte électronique et vers la prise électrique mâle (202) et le condensateur (1002) est placé entre l'inductance et la prise électrique femelle (207).

Cet adaptateur réseau courant porteur modulaire 200 antérieur présente également des limitations. Quel que soit le module de connexion utilisé sur l'adaptateur 200, le dispositif (ligne 3) qui se connecte à l'adaptateur (200) est obligatoirement un équipement réseau. Par conséquent il s'agit obligatoirement d'un appareil équipé d'un contrôleur réseau tel que un ordinateur ou d'une imprimante réseau très coûteuse. L'adaptateur ne permet pas de piloter une imprimante USB faible coût de n'importe quelle fabricant.

De plus le filtre passe-bas présente également quelques limites. En CEM le but est toujours d'atténuer les composantes HF tout en laissant passer les composantes BF. Une isolation haute fréquence est donc nécessaire pour les sources faibles impédances ou bruitées telles que les alimentation à découpage. C'est la plupart du temps le cas des alimentations du commerce telles que les chargeurs de PC portable ou de téléphone mobile et les alimentations d'ordinateurs. La structure du filtre placé entre la carte électronique de l'adaptateur (200) et la prise électrique femelle (207) a une impédance faible à l'entrée de la prise électrique (207) alors qu'il devrait avoir une impédance élevée.

### Résumé de l'invention

L'invention permet d'éliminer les problèmes décrits ci-dessus, d'apporter des améliorations et des applications innovantes grâce à un serveur d'impression courant porteur caractérisé en ce qu'il est constitué d'une prise électrique mâle, d'une prise électrique femelle et d'un connecteur hôte USB de type A soudé sur une carte électronique miniaturisée ayant une architecture particulière

Selon un premier aspect de l'invention, la carte électronique du serveur d'impression courant porteur est équipée d'un connecteur femelle USB hôte de type A permettant de brancher les imprimantes USB, les WEBCAM, les disques durs, les appareils photo numériques et tous les appareils clients USB équipés de connecteurs USB client de type B. Contrairement aux adaptateurs USB CPL existant, la carte électronique du serveur d'impression est capable de se connecter à toutes les imprimantes USB et à tous les périphériques USB du commerce.

Selon un second aspect de l'invention, la carte électronique du serveur d'impression courant porteur est également équipée d'un contrôleur hôte et d'une unité de traitement pouvant intégrer un driver de contrôleur hôte et un protocole de communication propre à l'impression par un réseau afin de communiquer avec les imprimantes USB et de convertir les données reçues dans un format acceptable par une imprimante. Un des avantages du serveur d'impression courant porteur est de fonctionner avec toutes les imprimantes USB du marché qui ne sont pas des imprimantes réseaux et qui fonctionneront comme des imprimantes réseaux grâce au serveur d'impression courant porteur en lui attribuant un adresse MAC et une adresse IP.

Selon un troisième aspect de l'invention, une partie du logiciel de l'unité de traitement détecte le type de périphérique client USB branché sur le connecteur hôte USB de la carte électronique télécharge et écrit automatiquement dans la mémoire de l'unité de traitement le logiciel adapté au périphérique connecté. Si l'utilisateur branche une imprimante et que le logiciel en place est celui de la WEBCAM, le serveur d'impression télécharge à partir du disque dur d'un système hôte le logiciel pour piloter l'imprimante. Le disque dur peut très bien être un disque dur client USB branché sur la carte électronique d'un second adaptateur hôte USB courant porteur. Le protocole de communication propre à l'impression par un réseau peut être complété d'un protocole permettant de communiquer avec les WEBCAM, les disques durs, les appareils photo numériques et tous les appareils clients USB. Tous les produits client USB pourront également fonctionner comme des appareils réseaux ayant une adresse MAC et une adresse IP.

Selon un quatrième aspect de l'invention, le serveur d'impression courant porteur est équipé d'un dipôle haute impédance entre sa prise électrique mâle et sa prise électrique femelle. Ce dipôle présente une impédance très élevée à chacune de ses extrémités et permet ainsi d'éliminer le bruit généré par les principaux produits électriques du marché et d'améliorer la communication en relevant l'impédance à la sortie du serveur d'impression courant porteur. Le serveur d'impression courant porteur est équipé d'une prise électrique mâle permettant de le brancher sur le secteur électrique afin de l'alimenter et de transmettre le signal courant porteur sur la ligne électrique. L'avantage de cette prise électrique est qu'elle peut être remplacée très facilement par une prise électrique adaptée à tous les pays du monde. Il est également équipé d'une prise électrique femelle permettant de brancher et d'alimenter l'appareil client USB tel que l'imprimante connectée au serveur d'impression courant porteur. Cette prise peut également être remplacée par une prise électrique adaptée à tous les pays du monde. Ainsi le serveur d'impression peut se brancher sur toutes les prises électrique de la planète et une seule prise électrique murale est nécessaire pour brancher et faire fonctionner l'imprimante USB comme une imprimante réseau. La carte électronique du serveur d'impression est équipée d'une alimentation universelle. Qu'elle que soit la tension du secteur électrique le serveur d'impression fonctionnera correctement. Il peut donc fonctionner correctement dans tous les pays du monde.

### Description détaillée des figures

Les caractéristiques de l'adaptateur USB Host Courants Porteurs qui fait l'objet de l'invention seront décrites plus en détail en se référant aux dessins annexés dans lesquels :
- la figure 1 est un schéma de la carte électronique sur laquelle est soudé le connecteur USB femelle de type A,
- la figure 2 est un schéma représentatif de l'architecture de cette carte,
- la figure 3 représente le boîtier dans lequel est intégré l'adaptateur hôte USB Courants Porteurs fonctionnant par défaut en serveur d'impression,
- la figure 4 représente le dipôle haute impédance filtrant les hautes fréquences et améliorant la qualité de communication,
- la figure 5 est un schéma de la topologie d'un réseau multi adaptateur hôte USB courant porteur.
- La figure 6 représente tous les types de connecteur USB existant et leur utilisation.
- La figure 7 est une vue générale du fonctionnement des serveurs d'impression Ethernet déjà connus.
- La figure 8 est une vue générale de l'utilisation d'un serveur d'impression Ethernet et d'adaptateur Ethernet courant porteur déjà connus dans un réseau courant porteur.
- La figure 9 est une vue générale d'un modem de communication courant porteur déjà connu.
- La figure 10 représente l'architecture du modem de la figure 10.
- La figure 11 est une vue d'ensemble d'un adaptateur réseau courant porteur modulaire déjà connu.
- La figure 12 est un schéma d'un filtre passe bas déjà connu.

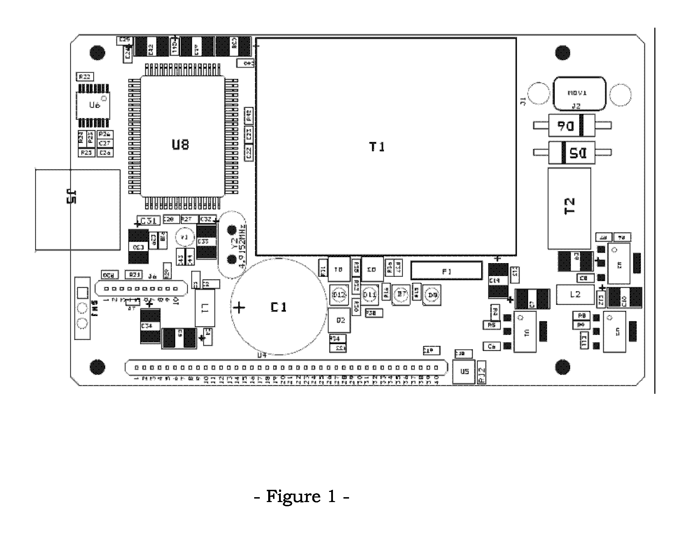

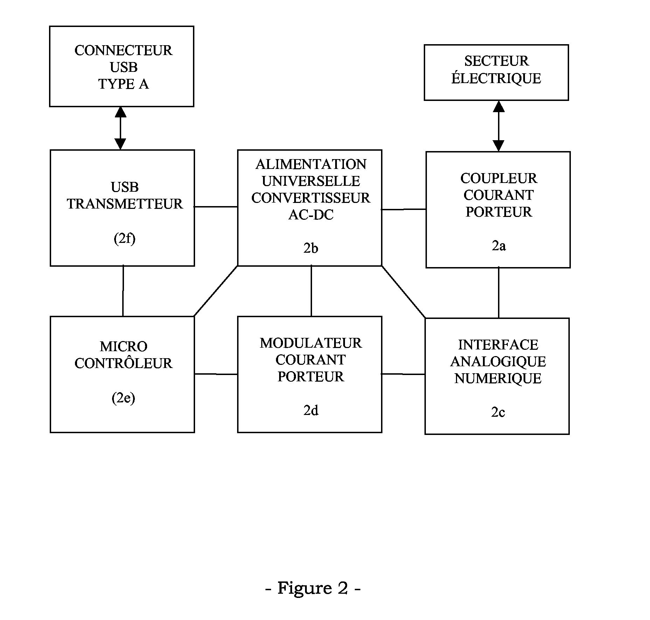

Selon les figures 1 et 2, l'adaptateur hôte USB Courants Porteurs comporte un coupleur Courants Porteurs (2a) qui permet de séparer le signal transportant les données de la tension secteur qui peut être le 230V/50 Hz utilisé en France.

Il peut également séparer le signal de données des autres tensions secteurs appliquées dans les autres pays.

Il comporte également un convertisseur AC/DC universel (2b) permettant d'alimenter la carte 2 avec les différentes tensions nécessaires à partir de toutes les tensions secteurs appliquées dans tous les pays du Monde.

L'adaptateur est par ailleurs équipé d'un modem Courants Porteurs composé d'une interface analogique numérique (2c) permettant de fournir le signal de données provenant du coupleur (2a) et d'un modulateur courants porteur (2d) permettant de démoduler le signal provenant de l'interface analogique numérique (2c) et de moduler le signal provenant d'un micro contrôleur (2e).

Selon la figure 2, ce micro contrôleur est relié d'une part à un transmetteur hôte USB (2f) permettant de piloter tous les appareils équipés d'un port client USB, notamment les imprimantes USB, les appareils photo numériques, clés de mémoire flash USB, Web CAM, clé WiFi USB... et comporte d'autre part de la mémoire de programme pouvant contenir les logiciels nécessaires aux fonctionnalités souhaitées ainsi que de la mémoire de données pouvant charger les données nécessaires au logiciel fonctionnant dans le micro contrôleur.

Selon l'invention, un tel adaptateur hôte USB Courants Porteurs présente l'avantage de pouvoir embarquer tous les logiciels nécessaires pour utiliser au mieux tous les appareils équipés d'une interface client USB, notamment le logiciel du Serveur d'Impression Réseau Courants Porteurs offrant les fonctions suivantes :
a. Hôte USB et gestion d'une interface imprimante.
   i. La fonction hôte USB a pour rôle de piloter le périphérique client USB équipé d'un connecteur femelle USB type B connecté sur son port équipé d'un connecteur femelle USB de type A. Il s'agit d'un hôte USB permettant de répondre aux besoins de la fonction serveur d'impression.
   ii. Les caractéristiques du hôte USB sont :
      1. Gestion des protocoles USB 1.1 « Full speed » et « Low speed ».
      2. Gestion des protocols USB2.
      3. Détection et énumération (identification) d'un nouveau périphérique.
      4. Emission/réception des flux sur les terminaisons (end-points).
      5. Encodage/décodage des paquets USB, calcul et vérification des CRC, gestion du protocole.
b. Serveur LPD
   i. Le SIRCP embarque un serveur d'impression de type LPD (Line Printer Daemon) s'appuyant sur la RFC 1179.
   ii. Ce protocole s'appuie sur la couche Ethernet TCP/IP, et est largement diffusé et reconnu dans les environnements Windows et Unix/Linux.
   iii. Les principales caractéristiques sont :
      1. Gestion de « Jobs » correspondant à des travaux d'impression. Les clients (poste utilisateurs) peuvent ajouter, supprimer un « job » ainsi que de connaître son l'état d'impression.
      2. Le serveur LPD est indépendant du modèle/fabricant de l'imprimante. Le driver de l'imprimante se trouve sur le poste client. Le serveur reçoit des données qu'il transmet vers l'imprimante telles que.
      3. Ce protocole est peu gourmant en ressource processeur, et en mémoire.
      4. Les « jobs » sont sérialisés, et consommés au rythme de l'impression. Il est possible de rajouter des fonctions de gestion plus intelligentes.
c. Serveur WEB
   i. Le serveur WEB embarqué permet de consulter un état synthétique du SIRCP indiquant l'état des impressions en cours.
   ii. Certains éléments de configurations peuvent éventuellement aussi être modifiés par cette interface, il est prévu des mécanismes de sécurisation (mot de passe) dans ce cas.
d. Gestion de la configuration
   i. Dans le cas où plusieurs SIRCP seraient connectés dans un même environnement il peut être nécessaire de prévoir des éléments de configuration sauvegardés en mémoire statique :
      1. Stratégie d'affectation de l'adresse IP (statique ou DHCP), et adresse IP par défaut.
      2. Nom du serveur LPD.
e. Auto téléchargement des logiciels drivers adaptés au client USB et du serveur WEB associé.
   i. Lors de l'installation d'un nouveau périphérique, les descripteurs fournissent les informations le concernant à savoir le PID (identifiant produit) et le VID (identifiant fabricant). Ce sont ces informations qui permettent au microcontrôleur du serveur d'impression courant porteur de détecter le type de client USB connecté.
   ii. Si le périphérique client USB connecté correspond au driver chargé dans le microcontrôleur la LED USB s'allume. Par défaut il s'agit du logiciel pour piloter les imprimantes. Si le périphérique client USB connecté ne correspond pas au driver la LED USB clignote pendant que le microcontrôleur identifie le type de client USB et réalise le changement de driver à partir d'un serveur de fichier sur lequel sont stockés tous les logiciels. Lorsque l'opération de changement de driver est terminée la LED reste allumée. Si le périphérique connecté n'est pas un client USB la LED reste éteinte.
   iii. Le serveur de fichier sur lequel est stocké les logiciels pilotes peut être un disque dur client USB connecté à l'adaptateur hôte USB courant porteur sur lequel est installé le bon logiciel. Il peut également être un lecteur ZIP client USB.
f. Client DHCP
   i. Lors de la mise sous tension du SIRCP le client DHCP diffuse son adresse MAC sur le réseau afin qu'un serveur DHCP lui attribue une adresse IP.
   ii. Des solutions de repli doivent être prévues dans le cas où le serveur DHCP ne serait pas trouvé (adresse IP par défaut).
g. Interfaçage Réseau Courant Porteur

Cette fonction réalise l'interfaçage matériel avec le composant modulateur Courants Porteurs quelque soit le fabricant, ainsi que sa configuration et l'émission/réception des données.

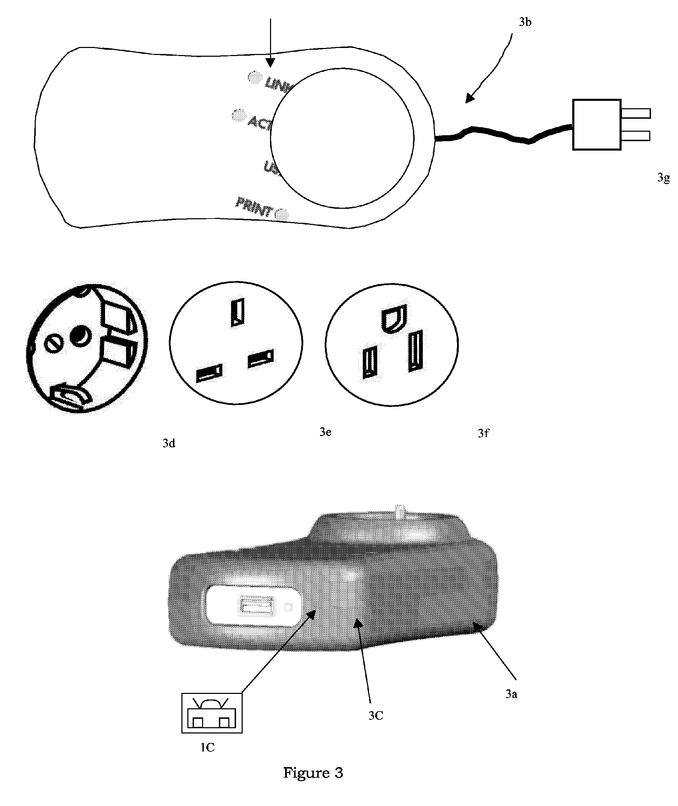

Selon la figure 3 l'adaptateur Hôte Courants Porteurs est intégré dans un boîtier plastique équipé d'un emplacement pour recevoir un cordon électrique mâle (3g), d'un emplacement sur le couvercle (3b) pour recevoir la prise électrique femelle ainsi que d'un emplacement (3c) pour recevoir le connecteur USB de type A (1c). Le module de le prise électrique femelle peut être un module pour les prises françaises et allemandes (3d), pour les prises électriques anglaises (3e) et pour les prises électriques US (3f). Ce module est interchangeable selon le besoin et il est fixé très simplement à l'aide de la vis (3h).

Selon la figure 3, le boîtier 3 est de préférence composé de trois parties, à savoir :
- un socle (3a) sur lequel est fixée la carte électronique représentée sur la figure 1 et qui reçoit la prise électrique mâle,
- un couvercle (3b) qui reçoit la prise électrique femelle(1b) représentée sur les figures (3d), (3^{e}) et (3f),
- une plaque modulaire (3c) sur laquelle sont positionnés le connecteur USB hôte de type A (1c), et un bouton de reset qui permet de redémarrer dans une configuration prédéfinie.

Il est à noter que la plaque modulaire (3c) peut être remplacée par une autre plaque pouvant accueillir des connecteurs différents, notamment des connecteurs RJ45 afin de permettre au boîtier d'intégrer un adaptateur Ethernet Courants Porteurs.

Selon l'invention, l'adaptateur hôte USB Courants Porteurs est avantageusement équipé de 4 LEDs à savoir :
- une LED « LINK » qui s'allume lorsque le boîtier détecte un autre produit Courants Porteurs sur la ligne,
- une LED « ACT » qui clignote lorsqu'il y a de l'activité Courants Porteurs,
- une LED « USB » qui s'allume lorsqu'un appareil client USB est branché sur l'adaptateur et qu'il correspond au logiciel pilote installé dans le microcontrôleur, notamment lorsqu'une imprimante est branchée sur l'adaptateur USB Courants Porteurs, et
- une LED « PRINT » qui clignote lorsque l'activité du logiciel intégré fonctionne notamment lorsque l'imprimante est en activité.

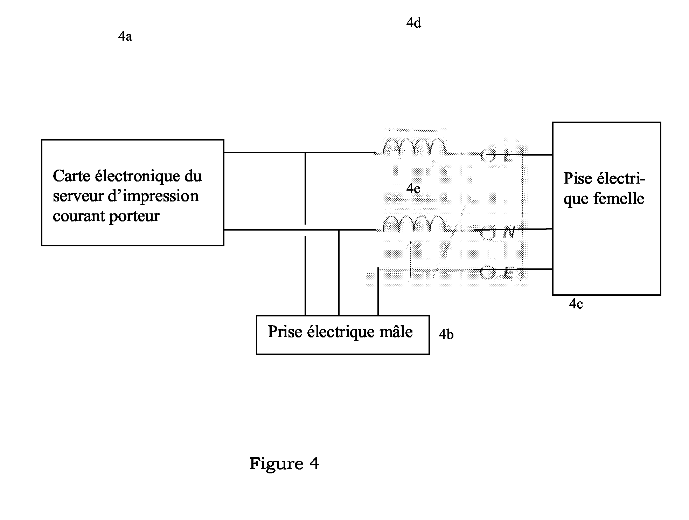

Selon la figure 4, le serveur d'impression courant porteur est équipé d'un dipôle haute impédance entre sa prise électrique mâle (4b) et sa prise électrique femelle (4c). Ce dipôle est composé d'une inductance (4d) de forte valeur entre la phase de la prise électrique femelle (4c) et la carte électronique. Il est également composé d'une seconde inductance (4e) de forte valeur entre la neutre de la prise électrique femelle (4c) et la carte électronique. La carte électronique est reliée directement à la prise électrique mâle (4b) qui l'alimente et qui lui permet de transmettre le signal de données hautes fréquences. Cela donne une meilleure atténuation du bruit injectée par les alimentations fortement capacitives telles que la plupart des alimentations des produits tels que les téléphones portables et les ordinateurs.

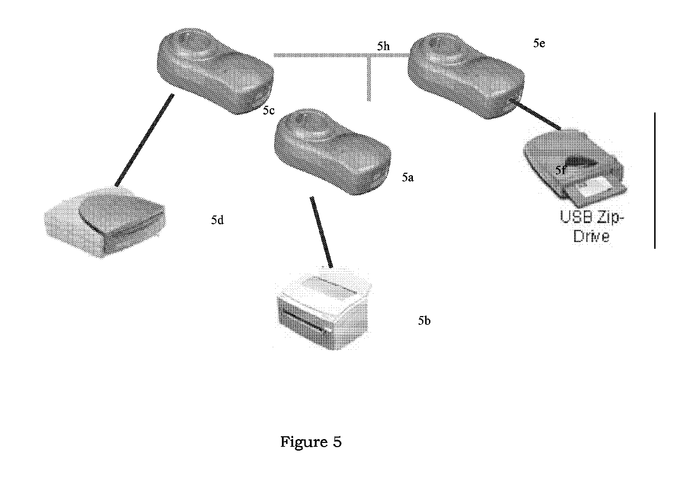

Selon la figure 5, le serveur d'impression peut réaliser un auto téléchargement des logiciels pilotes adaptés au client USB et du serveur WEB associé. Par défaut le serveur d'impression courant porteur (5a) contient le logiciel permettant de piloter les imprimantes USB (5b). En revanche si l'utilisateur connecte un lecteur USB de disquette ZIP (5f) sur le serveur d'impression courant porteur (5^{e}), la LED USB de ce dernier va clignoter pendant qu'il télécharge le logiciel adapté qui est stocké sur le disque dur USB (5d) également piloté par un serveur d'impression courant porteur (5c) contenant le logiciel pour piloter les disques durs. Le téléchargement du logiciel se fait par la ligne électrique (5h)

## Revendications

1. Serveur d'impression Courants Porteurs USB permettant de connecter, de piloter et de faire fonctionner une imprimante client USB en imprimante réseau sur les prises électrique du réseau électrique,
**caractérisé en ce qu'**
il est constitué d'une prise électrique mâle (3g), d'une prise électrique femelle (3d), d'une dipôle haute impédance (4d, 4e) entre la prise femelle (3d) et la carte (2) et d'un connecteur hôte USB de type A (1c) soudé sur une carte électronique miniaturisée (2).

2. Adaptateur USB Host Courants Porteurs selon la revendication 1,
**caractérisé en ce qu'**
il comporte un micro contrôleur (2e) :
- relié à un transmetteur hôte USB (2f) permettant de piloter matériellement tous les appareils équipés d'un port client USB de type B, notamment les imprimantes USB, les appareils photo numériques, clé mémoire flash USB, web CAM, clé WiFi USB...
- comportant de la mémoire de programme pouvant contenir les logiciels nécessaires aux fonctionnalités souhaitées, et
- comportant de la mémoire de données pouvant charger les données nécessaires aux logiciels fonctionnant dans le micro contrôleur.

3. Adaptateur USB Host Courants Porteurs selon les revendications 1 et 2,
**caractérisé en ce qu'**
il comporte un système « Plug And Play » :
• comportant une fonction de détection du périphérique client USB connecté
• comportant une fonction identification du périphérique client USB connecté
• comportant une fonction de mise à jour automatique par le réseau Courant Porteur du logiciel pilote client USB.

4. Adaptateur USB Host Courants Porteurs selon les revendications 1 et 2,
**caractérisé en ce qu'**
il comporte un convertisseur AC/DC universel (3b) permettant d'alimenter la carte (2) avec les différentes tensions nécessaires à partir de toutes les lignes électriques de tous les pays du monde notamment le 230V/50Hz appliqué en France.

5. Adaptateur USB Host Courants Porteurs selon la revendication 1,
**caractérisé en ce qu'**
il est intégré dans un boîtier plastique (4) équipé :
- d'un emplacement (3b) pouvant facilement recevoir tous types de prises électriques femelles notamment les prises électriques femelles franco-allemande (3h), anglaise (3^{e}) et américaine (3f),
- d'un emplacement pouvant facilement recevoir un cordon interchangeable avec les cordons adaptés à chaque pays, et
- d'un emplacement (3c) pouvant facilement recevoir le connecteur USB de type B (1c) et tous autres connecteur tel que un connecteur Ethernet RJ45.

6. Adaptateur USB Host Courants Porteurs selon les revendications 1 et 5,
**caractérisé en ce qu'**
il comporte un dipole haute impédance (4d, 4^{e}) permettant de supprimer le bruit généré par tous types de sources telles que les alimentations de PC portable et de téléphone portable.

7. Adaptateur USB Host Courants Porteurs selon la revendication 1,
**caractérisé en ce qu'**
il comporte un modem Courants Porteurs composé :
a. d'une interface analogique numérique (2c) permettant de fournir le signal de données provenant du coupleur (2a), et
b. d'un modulateur courants porteur (2b) permettant de démoduler le signal provenant de l'interface analogique numérique (2c) et de moduler le signal provenant d'un micro contrôleur (2e).

8. Adaptateur USB Host Courants Porteurs selon la revendication 1,
**caractérisé en ce qu'**
il comporte un coupleur Courants Porteurs (3a) qui permet de séparer le signal transportant les données du 230 V/50 Hz et toutes autres tensions secteur.

9. Adaptateur USB Host Courants Porteurs selon la revendication 5,
**caractérisé en ce que**
le boîtier (3) est composé de trois parties, à savoir :
- un socle (3a) sur lequel est fixée la carte électronique et qui reçoit la prise électrique mâle (3g),
- un couvercle fixe (3) qui reçoit la prise électrique femelle (3d, 3^{e}, 3f)), et sur lequel est positionné des LEDs d'information
- une plaque modulaire (3c) sur lequel est positionné le connecteur USB, et un bouton de reset qui permet de redémarrer dans une configuration prédéfinie.

10. Adaptateur USB Host Courants Porteurs selon la revendication 9,
**caractérisé en ce qu'**
il est équipé de 4 LEDs, à savoir :
- une LED qui s'allume lorsque le boîtier détecte un autre produit Courants Porteurs sur la ligne,
- une LED qui clignote lorsqu'il y a de l'activité Courants Porteurs,
- une LED qui s'allume lorsqu'un appareil est branché sur l'adaptateur, notamment lorsqu'une imprimante est branchée sur l'adaptateur USB Courants Porteurs, et
- une LED qui clignote lorsque l'activité du logiciel intégré fonctionne notamment lorsque l'imprimante est en activité.
